# EUROPÄISCHE PATENTANMELDUNG

(11) **EP 4 431 871 A2**
(43) Veröffentlichungstag der Anmeldung: **18.09.2024**
(21) Anmeldenummer: 24184102.2
(22) Anmeldetag: 17.05.2018
(51) Int. Cl.: G01B 21/04

(54) **VERFAHREN UND VORRICHTUNG ZUM ERZEUGEN EINES PRÜFPLANS FÜR DIE PRÜFUNG EINES MESSOBJEKTS, VERFAHREN UND VORRICHTUNG ZUM PRÜFEN EINES MESSOBJEKTS UND SOWIE COMPUTERPROGRAMMPRODUKT**

(62) Teilanmeldung aus: 22180157.4
(71) Anmelder: Carl Zeiss Industrielle Messtechnik GmbH, 73447 Oberkochen (DE)
(72) Erfinder: Mayr, Ana Carolina, 73430 Aalen (DE); Rieger, Stephan, 73447 Oberkochen (DE); Mayer, Florian, 71522 Backnang (DE)
(74) Vertreter: Ramrath, Lukas

(57) **Zusammenfassung**

Die Erfindung betrifft Verfahren zum Erzeugen eines resultierenden Prüfplans für die Prüfung eines Messobjekts (24),
wobei ein Datensatz durch Vermessen des Messobjekts (24) erzeugt wird,
wobei datenbasiert das Messobjekt (24) oder ein Teil des Messobjekts (24) wenigstens einer Objektklasse zugeordnet wird,
wobei als objektklassenspezifischer Prüfplan ein der Objektklasse zugeordneter Prüfplan bestimmt wird, und
wobei der resultierende Prüfplan in Abhängigkeit des objektklassenspezifischen Prüfplans bestimmt wird.

Ferner betrifft die Erfindung ein Computerprogrammprodukt und ein Verfahren und eine Vorrichtung zum Prüfen eines Messobjekts (24).

## Beschreibung

Die Erfindung betrifft ein Verfahren und eine Vorrichtung zum Erzeugen eines Prüfplans für die Prüfung eines Messobjekts, ein Verfahren und eine Vorrichtung zum Prüfen eines Messobjekts und sowie ein Computerprogrammprodukt.

Es ist bekannt, für die Prüfung bzw. Vermessung von Werkstücken sogenannte Prüfpläne zu erzeugen, wobei ein solcher Prüfplan Parameter eines Prüfprozesses definiert, durch den die Qualität eines Werkstücks bzw. Messobjekts festgestellt werden kann. Ein derartiger Prüfplan kann beispielsweise anhand bestimmter allgemeiner Normen oder Hersteller- oder Kundenvorgaben festgelegt werden. Der Prüfplan wird hierbei durch ein entsprechendes Prüf- oder Messgerät durchgeführt, beispielsweise durch ein sogenanntes Koordinatenmessgerät (KMG).

In dem Prüfplan sind die zu prüfenden Prüfmerkmale eines zu vermessenden Werkstücks bzw. Informationen zu diesen Prüfmerkmalen enthalten. Solche Prüfmerkmale können beispielsweise sein der Abstand der Mittelpunkte zweier Bohrungen, die Abweichungen von Messpunkten auf einer Freiformfläche gegenüber einer Sollform, die Lage des Mittelpunktes einer Bohrung, der Durchmesser einer Bohrung etc. Ebenfalls kann der Prüfplan Informationen zu einer Lage und Gestalt des zu prüfenden Werkstücks, z.B. in einem Prüf-Koordinatensystem, und Informationen zu Soll-Werten von Prüfmerkmalen enthalten. Informationen zur Gestalt können z.B. in Form eines CAD-Modells im Prüfplan enthalten sein. Durch ein solches CAD-Modell können auch die erläuterten Soll-Werte festgelegt sein. Weiter kann der Prüfplan Toleranzangaben für ein Prüfmerkmal umfassen.

Weiter können durch den Prüfplan Arbeitsanweisungen zur Durchführung der durch den Prüfplan definierten Prüfung, z.B. in Form von Befehlen, die zur Durchführung und Datenerzeugung einzustellenden Prüfparameter, z.B. Beleuchtungsparameter oder Antastkräfte, sowie die zur Durchführung zu verwendenden Prüfkomponenten, z.B. Sensoren, festgelegt sein. Auch kann ein Prüfplan Prüfparameter enthalten, die zur Laufzeit der Prüfung eingestellt oder verändert werden können, z.B. um zeitlich nachfolgende Prüf(teil)prozesse anzupassen.

Weiter kann eine zur Durchführung der Prüfung abzufahrende Prüftrajektorie, z.B. eines Sensors, durch den Prüfplan festgelegt sein. Auch kann die Prüfergebnisdokumentation durch den Prüfplan festgelegt sein.

Während der Durchführung des Prüfplans erzeugte Ist-Informationen, z.B. Messpunkte, Bilder oder Messwerte, können ebenfalls im Prüfplan abgespeichert werden.

Wie vorhergehend erläutert können dann, basierend auf dem Prüfplan, durch eine Messeinrichtung bzw. ein Messgerät zu erfassende Messpunkte festgelegt werden, die zur Auswertung der Prüfmerkmale notwendig sind. Dann kann ein Messablauf definiert werden, um hierdurch Messpunkte auf der Oberfläche des zu vermessenden Werkstücks zu erfassen. In einem Prüfschritt bzw. Messschritt wird dann der so festgelegte Messablauf durch das Messgerät (zum Beispiel in Form eines KMG) abgearbeitet, wodurch dann die benötigten Messpunkte gemäß dem durch den Prüfplan festgelegten Messablauf erfasst und gespeichert werden. Hiernach werden die einzelnen Prüfmerkmale des Prüfplans basierend auf den aufgenommenen Messpunkten ausgewertet und hierdurch die zur Erstellung eines Messprotokolls erforderlichen Daten gewonnen. Allgemein ausgedrückt kann ein Prüfplan somit Vorschriften (zum Beispiel in Form zu erfassender Messpunkte) enthalten, welche einen gewünschten Messablauf mittelbar oder unmittelbar beschreiben.

Beispielsweise ist in der Druckschrift DE 198 21 371 A1 ein Verfahren zum Vermessen eines Werkstücks mit einem automatisierten Messablauf und ein zur Ausführung des Verfahrens entsprechend eingerichtetes Koordinatenmessgerät beschrieben. Das Verfahren umfasst drei wesentliche Verfahrensschritte. In einem ersten Verfahrensschritt wird der automatische Messablauf festgelegt, wobei dieser anhand von Prüfmerkmalen festgelegt wird, die während eines Messablaufs ausgewertet werden sollen. Dabei werden unter Zuhilfenahme von CAD-Daten des Werkstückes Geometrieelemente auf der Werkstückoberfläche ausgewählt, die notwendig sind, um gewünschte Prüfmerkmale zu prüfen. Außerdem werden die Verfahrwege für den Sensor zum Abtasten der jeweiligen Geometrieelemente festgelegt. In einem zweiten Verfahrensschritt wird ein Werkstück dann gemäß dem Messablauf abgetastet. In einem dritten Verfahrensschritt werden die zu prüfenden Prüfmerkmale dann aufgrund der im Messablauf aufgenommenen Messdaten ausgewertet und an den Bediener des Koordinatenmessgeräts in nicht näher beschriebener Form ausgegeben. Eine solche Ausgabe erfolgt üblicherweise in Form eines Messprotokolls, das als elektronisches Dokument erzeugt wird, beispielsweise als PDF-Dokument.

Weiter bekannt sind Anwendungen, bei denen Gruppen von an sich gleichförmigen Werkstücken vermessen werden müssen, wobei sich die Werkstücke aber in zumindest einer Dimension unterscheiden. Diese Dimension kann z.B. die Gesamtlänge sein. Zur Vermessung einer solchen Gruppe von Werkstücken muss der Anwender entweder stets einen Parameter, beispielsweise die Gesamtlänge, in einer Software des Messgeräts ändern oder jedes Mal die Werkstücklänge neu einmessen.

Es stellt sich das technische Problem, ein Verfahren, ein Computerprogrammprodukt und eine Vorrichtung zu schaffen, welche das Erzeugen eines Prüfplans vereinfachen, insbesondere beschleunigen, und somit eine vereinfachte, insbesondere beschleunigte, Vermessung und Prüfung des Messobjekts ermöglichen.

Diese Aufgabe wird durch Verfahren, Vorrichtungen und ein Computerprogrammprodukt gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination sowie Reihenfolge auch bei der vorliegend offenbarten Lösung vorgesehen sein können, sofern nicht anders angegeben oder ersichtlich.

Die Erfinder haben erkannt, dass der Aufwand zum Erstellen eines Prüfplans reduziert werden kann, wenn für ein gegebenes Messobjekt auf bereits existierende Prüfpläne vergleichbarer Messobjekte zurückgegriffen wird. Ein grundlegender Erfindungsgedanke besteht deshalb darin, den Prüfplan für ein gegebenes Messobjekt zumindest teilweise basierend auf einem Prüfplan für ein vergleichbares Messobjekt zu erstellen.

Im Detail wird ein Verfahren zum Erzeugen eines resultierenden Prüfplans für die Prüfung eines Messobjekts vorgeschlagen,
- wobei wenigstens ein Datensatz durch Vermessen des Messobjekts erzeugt wird,
- wobei datenbasiert das Messobjekt oder ein Teil des Messobjekts wenigstens einer Objektklasse zugeordnet wird,
- wobei als objektklassenspezifischer Prüfplan ein der Objektklasse zugeordneter Prüfplan bestimmt wird, und
- wobei der resultierende Prüfplan in Abhängigkeit des objektklassenspezifischen Prüfplans bestimmt wird.

Das Verfahren kann allgemein computergestützt ausgeführt werden und insbesondere mittels dem nachstehend erläuterten Computerprogrammprodukt oder der Vorrichtung. Insbesondere kann jeder Verfahrensschritt zumindest teilweise, überwiegend oder vollständig computergestützt oder, mit anderen Worten, automatisch ausgeführt werden. Es ist aber auch möglich, zumindest einzelne Verfahrensschritte teilweise (d. h. semi-automatisch) oder vollständig manuell auszuführen, insbesondere basierend auf Eingaben eines Nutzers. Insbesondere das Zuordnen zu einer Objektklasse kann benutzergesteuert oder manuell erfolgen.

Bei dem Messobjekt kann es sich um ein (insbesondere industriell gefertigtes) Bauteil oder Werkstück, eine Baugruppe oder ein allgemeines technisches System handeln. Der Datensatz kann auf Basis eines Vermessens von geometrischen Eigenschaften des Messobjekts erzeugt werden. Insbesondere kann der Datensatz Informationen enthalten oder definieren, die auf entsprechende geometrische Eigenschaften des Messobjekts schließen lassen oder diese angeben, wie zum Beispiel dessen Kontur, Umriss und/oder Form. Geeignete Datenformate bzw. -inhalte, um derartige Informationen oder Eigenschaften zu beschreiben sind dem Fachmann bekannt. Zusätzlich oder alternativ kann im Rahmen des Vermessens eine Orientierung und/oder Position des Messobjekts in einem vorbestimmten Koordinatensystem ermittelt werden und vorzugsweise auch in dem Datensatz (oder als ein zusätzlicher Datensatzteil) hinterlegt werden. Allgemein kann der Datensatz verschiedene Teilmengen oder Teildatensätze umfassen, die in ihrer Gesamtheit jedoch vorzugsweise die durch das Vermessen erhaltenen Informationen über das Messobjekt zusammenfassen. Um nachstehend erläuterte Übereinstimmungen mit Objektklassen festzustellen, kann der Datensatz nach mit einer Objektklasse übereinstimmenden Eigenschaften (und/oder hiermit übereinstimmenden Datensatz-Teilmengen) durchsucht werden. Alternativ oder zusätzlich kann ein Mustererkennungsverfahren auf Basis des Datensatzes ausgeführt werden. Der Datensatz kann z.B. ein Bilddatensatz sein und Bildinformationen umfassen.

Das Vermessen kann mittels einer geeigneten Vermessungseinrichtung und/oder einem geeigneten Messsensor ausgeführt werden. Ein Beispiel für eine Vermessungseinrichtung ist ein Koordinatenmessgerät mit einem daran angebrachten taktilen oder berührungslosen Messsensor. Das Vermessen kann auch als eine optische Objektvermessung realisiert sein, beispielsweise auf Basis von Triangulation, Streifenprojektion und/oder einer Kameraerfassung. Zusätzlich oder alternativ kann das Vermessen auf Basis einer Objektdurchstrahlung ausgeführt werden, wobei zum Beispiel Magnet- und/oder Röntgenstrahlung zum Einsatz kommen kann. Ein Beispiel betrifft die Objektvermessung mittels Computertomografie (CT). Ferner kann das Messobjekt mittels Lichtprojektion und/oder Schattenwurf vermessen werden. Prinzipiell können eine Vermessungseinrichtung zum anfänglichen Vermessen des Werkstücks und eine Vermessungseinrichtung bzw. ein Messgerät zum Durchführen der Prüfung gemäß des Prüfplans verschieden voneinander sein. Es kann sich aber auch um die gleichen Einrichtungen bzw. Vorrichtungen handeln. Das Vermessen kann auch eine (ggf. ausschließlich) bildliche Erfassung des Messobjekts umfassen, um auf Basis der gewonnenen Bildinformationen ein Mustererkennungsverfahren durchzuführen.

Insbesondere sind auch Kombinationen der vorstehenden Messprinzipien für das Vermessen möglich. Beispielsweise sind Koordinatenmessgeräte bekannt, die ein Messobjekt mit mehreren verschiedenen (zum Beispiel auswechselbaren) Sensoren und somit auch basierend auf verschiedenen Messprinzipien vermessen können. Als Beispiel sei ein Vermessen mittels Weißlichtsensoren, taktilen Abtastsensoren sowie optischen Sensoren mittels desselben Koordinatenmessgeräts genannt. Zusätzlich oder alternativ kann ebenso vorgesehen sein, ein Messobjekt mittels verschiedener Koordinatenmessgeräte zu vermessen, die zum Beispiel auch basierend auf jeweils individuellen Messprinzipien eine Objektvermessung durchführen können. Die je Koordinatenmessgerät gewonnenen Messinformationen können dann als Gesamtmessergebnis für ein konkretes Messobjekt zusammengesetzt werden.

Im Rahmen der vorliegenden Offenbarung kann der Begriff datenbasiert allgemein bedeuten, das vorbestimmte bzw. ermittelte Daten (oder zumindest Teilmengen hiervon) herangezogen und/oder ausgewertet werden, um darauf basierend weitere Maßnahmen durchzuführen oder zu veranlassen. Die durch das Vermessen gewonnenen Messinformationen bzw. -ergebnisse können in einem Datensatz zusammengefasst werden, der für die datenbasierte Zuordnung zu einer Objektklasse herangezogen werden kann. Der Datensatz kann gemäß vorbestimmten Regeln erstellt und/oder formatiert werden. Insbesondere können nur ausgewählte Messinformationen darin hinterlegt werden, die für das Zuordnen zu einer Objektklasse relevant sind. Dabei kann es sich um Messinformationen zu denselben Eigenschaften handeln, die auch der Definition einer Objektklasse zugrunde liegen. Dies mindert entsprechend den Berechnungsaufwand und erhöht allgemein die Wahrscheinlichkeit, dass eine zutreffende Zuordnung zu der tatsächlich relevanten Objektklasse gelingt.

Das Zuordnen des Messobjekts zu einer Objektklasse kann auf Basis einer vorbekannten und/oder vordefinierten Zuordnung zwischen datenbasiert bestimmbaren Objekteigenschaften und (ebenfalls vorbekannten und/oder vordefinierten) Eigenschaften von Objektklassen erfolgen. Die Eigenschaften einer Objektklasse können beispielsweise Eigenschaften eines Referenzobjekts dieser Objektklasse sein. Allgemein kann das Zuordnen automatisiert, semi-automatisch oder manuell erfolgen, wobei automatische Aspekte zum Beispiel mittels eines Computers realisiert werden können. Eine automatische Zuordnung kann umfassen, dass mindestens eine Eigenschaft des Messobjekts basierend auf dem Datensatz bestimmt wird (und/oder basierend auf einer Teilmenge des Datensatzes, die diese Eigenschaft beschreibt). Die Eigenschaft und/oder Teilmenge kann daraufhin computergestützt und ohne zusätzliche Nutzereingaben mit einer korrespondierenden Eigenschaft wenigstens einer oder einer Mehrzahl von Objektklassen verglichen werden. Hierfür können Datensätze verwendet werden, welche eine oder mehrere Objektklassen beschreiben. Wird eine vollständige oder ausreichende Übereinstimmung zu einer Eigenschaft einer Objektklasse ermittelt, kann daraufhin die Zuordnung des Messobjekts zu dieser Objektklasse erfolgen. Das Ermitteln von Übereinstimmungen kann eine Überprüfung dahingehend umfassen, ob etwaige Abweichungen zwischen dem Messobjekt und einer Objektklasse ein vorbestimmtes akzeptables Maß nicht überschreiten.

Eine semi-automatische Zuordnung kann umfassen, dass einem Nutzer wenigstens eine Objektklasse (automatisch bzw. computergestützt) vorgeschlagen wird, welcher das Messobjekt potentiell zuzuordnen ist. Der Nutzer kann diesen Vorschlag dann durch eine Nutzerinteraktion bestätigen und/oder eine Auswahl zwischen einer etwaigen Mehrzahl an vorgeschlagenen Objektklassen treffen. Das Vorschlagen einer Objektklasse kann auf Basis des vorstehend geschilderten (vorzugsweise automatischen) Ermittelns von datenbasierten Übereinstimmungen zwischen dem Messobjekt und der oder den Objektklasse(n) erfolgen.

Eine manuelle Zuordnung des Messobjekts zu einer Objektklasse kann durch eine entsprechende Nutzereingabe erfolgen. Beispielsweise kann der Nutzer eine Objektklasse selbst definieren, angeben und/oder in einen Datensatz des Messobjekts eintragen. Unabhängig davon, wie die Zuordnung genau erfolgt (d. h. automatisch, semi-automatisch oder manuell), kann diese in einer Speichereinrichtung hinterlegt werden. Vorzugsweise wird die Zuordnung in einem dem Messobjekt zugeordneten Datensatz eingetragen und/oder abgespeichert, beispielsweise in demselben Datensatz, der auch die Messobjekt-bezogenen Messergebnisse enthält.

Im Rahmen der vorliegenden Offenbarung kann allgemein vorgesehen sein, dass eine Mehrzahl von Objektklassen (wenigstens aber eine Objektklasse) vorhanden ist. Das Verfahren kann auch den Schritt der Definition wenigstens einer Objektklasse oder aber einer Mehrzahl von Objektklassen umfassen, was zum Beispiel anhand einer Definition und/oder Auswahl von eine Objektklasse definierenden Eigenschaften erfolgen kann.

Die Objektklassen können in Form eines Datensatzes beschrieben und/oder definiert sein, insbesondere derart, dass die wesentlichen Eigenschaften von zu dieser Objektklasse gehörenden Objekten in dem Datensatz beschrieben und/oder daraus herleitbar sind. Je Objekt kann ein eigener Datensatz definiert sein. Alternativ kann ein Gesamtdatensatz bereitgestellt sein, der Teilmengen oder Teildatensätze enthält, welche jeweils eine Objektklasse definieren. Allgemein können die Objektklassen derart definiert sein, dass diese eine Gruppe von Objekten mit vorbestimmten Eigenschaften zusammenfassen oder definieren. Bei den Eigenschaften kann es sich um jegliche im Rahmen des Vermessens ermittelbare Objekteigenschaften handeln und insbesondere um geometrische Objekteigenschaften, beispielsweise eine Form oder Kontur.

Innerhalb einer Objektklasse können auch lediglich Teile von Objekten zusammengefasst oder beschrieben sein oder Objekte, welche Bestandteile von mehrteiligen Objekten oder Baugruppen sein können. Dies ermöglicht das Zuordnen von lediglich Teilen eines Messobjekts zu einer entsprechenden Objektklasse. Im Umkehrschluss kann dies bedeuten, dass ein Messobjekt, welches verschiedene (und insbesondere verschieden geformte) Teile oder Bereiche umfasst, auch verschiedenen Objektklassen zugeordnet werden kann oder dass verschiedene Teile oder Bereiche verschiedenen Objektklassen zugeordnet werden können, beispielsweise wenn die verschiedenen Teile oder Bereiche verschiedenen Objektklassen entsprechen. Objektklassen, die lediglich Objektteile oder Teile von Baugruppen beschreiben, können auch als Objektunterklassen bezeichnet werden.

Als ein Beispiel seien Werkzeuge genannt, die über einen Griff oder Stil und einen daran angebrachten und tatschlich zum Wechselwirken mit weiteren Bauteilen oder Objekten vorgesehenen Werkzeugkopf verfügen (zum Beispiel ein Schraubenzieher mit einem Griff und einem Werkzeugkopf in Form einer Klinge). Eine Objektklasse kann derart definiert sein, dass diese lediglich vergleichbare oder identische Werkzeugköpfe umfasst, nicht aber etwaige daran angebrachte Griffe. Ein Messobjekt in Form eines Schraubenziehers kann dann nach dem Vermessen allein auf Basis seiner Klinge (bzw. Werkzeugkopfes) und somit lediglich basierend auf einem Teil des Messobjekts einer entsprechenden Objektklasse zugeordnet werden. Zusätzlich kann vorgesehen sein, dass auch der Griff als ein gesonderter Teil des Messobjekts vermessen und einer entsprechenden Griff-Objektklasse zugeordnet wird. Folglich kann das Messobjekt (bzw. können Teile des Messobjekts) verschiedenen Objektklassen zugeordnet werden. Wie nachstehend erläutert, können dann auch für jeden entsprechenden Teil des Messobjekts eigene Prüfpläne ermittelt werden, aus denen sich der resultierende Prüfplan zusammensetzen kann.

Eine Objektklasse kann allgemein auf Basis eines klassenspezifischen Referenzobjektes definiert sein oder ein solches umfassen. Das Referenzobjekt kann derart gewählt und/oder definiert sein, dass es die für diese Objektklasse wesentlichen Objekteigenschaften aufweist oder angibt. Ein Messobjekt kann dann der Objektklassen zugeordnet werden, wenn es zumindest Teile oder sämtliche dieser Objekteigenschaften ebenfalls aufweist oder dazu in einem vorbestimmten Maß ähnliche Eigenschaften. Das Referenzobjekt kann virtuell erstellt werden. Alternativ kann ein reales Referenzobjekt vermessen werden. Auf Basis des virtuellen Objektes oder der realen Vermessungsergebnisse können dann die relevanten Eigenschaften hergeleitet oder ausgewählt werden.

Der objektklassenspezifische Prüfplan kann auch als Masterprüfplan bezeichnet werden. Je Objektklasse kann lediglich ein objektklassenspezifischer Prüfplan vorgesehen sein.

Dieser kann zumindest Teile eines Messablaufs, der zum Vermessen von Objekten dieser Objektklasse angewendet werden soll, angeben oder definieren. Allgemein kann der objektklassenspezifische Prüfplan (aber auch der resultierende Prüfplan) in elektronischer Form bzw. in Form einer Datei erzeugt werden. Wie vorhergehend erläutert, kann ein solcher Prüfplan mindestens ein, vorzugsweise mehrere, Prüfmerkmal(e) des zu vermessenden Messobjekts enthalten bzw. kodieren. Das Prüfmerkmal kann insbesondere eine dimensionelle Größe sein, beispielsweise eine Länge, ein Abstand, ein Durchmesser usw. Basierend auf dem Prüfplan können dann zu erfassenden Messpunkte und/oder ein Messablauf zum Vermessen des Messobjekts durch eine entsprechende Messeinrichtung, insbesondere durch ein Koordinatenmessgerät, definiert werden. Verfahren zur Festlegung der Messpunkte und zur Erzeugung eines Messablaufs aus einem Prüfplan sind hierbei dem Fachmann bekannt und nicht Gegenstand dieser Erfindung.

Das Zuordnen eines Prüfplans zu der Objektklasse kann vorab erfolgen (d. h. vor dem Durchführen des Verfahrens). Insbesondere kann eine entsprechende Zuordnung in Form eines Datensatzes abgespeichert und/oder in einer Speichereinrichtung hinterlegt werden. Das Bestimmen eines objektklassenspezifischen Prüfplans kann umfassen, das zum Beispiel basierend auf einer entsprechenden Zuordnung ein Prüfplan ermittelt und/oder ausgelesen wird, der zu einer dem Messobjekt zugeordneten Objektklasse gehört. Dies erfolgt vorzugsweise automatisch, beispielsweise durch automatisches bzw. computergestütztes Auslesen des entsprechenden Prüfplans aus einem hinterlegten Datensatz.

Der schlussendlich bestimmte resultierende Prüfplan kann den objektklassenspezifischen Prüfplan umfassen oder diesem entsprechen. Alternativ kann der resultierende Prüfplan auf Basis eines Anpassens des objektklassenspezifischen Prüfplans bestimmt werden, wie nachstehend noch näher erläutert. Wird der Prüfplan auf Basis einer Objektklasse ermittelt, die lediglich einem Teil des Messobjekts entspricht, kann der resultierende Prüfplan nur für diesen Messobjekt-Teil auf Basis des objektklassenspezifischen Prüfplans ermittelt werden (beispielsweise für diesen Teil den objektklassenspezifischen Prüfplan umfassen oder diesem entsprechen). Für einen verbleibenden Teil des Messobjekts, der keiner oder aber einer anderen Objektklasse entspricht, kann der Prüfplan hingegen in Abhängigkeit anderer Informationen, Prüfpläne oder Vorschriften definiert werden. Somit kann der resultierende Prüfplan auch nur lediglich zum Teil auf Basis des objektklassenspezifischen Prüfplans ermittelt werden und/oder sich aus verschiedenen objektklassenspezifischen Prüfplänen zusammensetzen, bspw. wenn das Messobjekt verschiedene Teile bzw. Bereiche umfasst, die verschiedenen Objektklassen zuzuordnen sind. Die objektklassenspezifischen Prüfpläne (und/oder der resultierende Prüfplan) können in einem solchen Fall mit Informationen versehen werden, welche angeben, auf welche Teile des Messobjekts (bzw. in welchen Bereichen) sie anzuwenden sind.

Insgesamt kann somit erreicht werden, dass ein Nutzer zur Erzeugung des Prüfplans nicht manuell sämtliche zu untersuchenden Prüfmerkmale und/oder Messabläufe festlegen muss. Stattdessen kann auf Basis einer ermittelten Zuordnung zu einer vordefinierten Objektklasse ein geeigneter Prüfplan teilweise oder vollständig vorgegeben werden. Hierdurch wird einerseits die Zeitdauer zum Erzeugen eines Prüfplans und somit auch zur Prüfung des Messobjekts reduziert, andererseits wird auch eine Bedienerfreundlichkeit bei der Erzeugung des Prüfplans erhöht.

Übergeordnet kann im Rahmen der vorliegenden Offenbarung jeglicher Prüfplan (d. h. jeglicher resultierender oder objektklassenspezifischer Prüfplan) einer der einleitend diskutierten Varianten entsprechen und/oder Informationen der einleitend genannten Art umfassen. In allgemeinster Form kann ein Prüfplan Vorschriften zum Vermessen eines Objekts (zum Beispiel des Messobjekts) definieren, also beispielsweise den Ablauf des Vermessens und/oder die zu vermessenden Messpunkte angeben. Insbesondere kann der Prüfplan zu überprüfende Prüfmerkmale definieren und vorzugsweise damit einhergehende Messpunkte. Ferner kann mindestens ein Prüfkriterium definiert sein, dass einem Prüfmerkmal zugeordnet ist. Das Prüfkriterium kann nach Bestimmung des Prüfmerkmals im Rahmen einer Messobjektvermessung und der dabei erhaltenen Messergebnissen (zum Beispiel in Form eines Messdatensatzes) ausgewertet werden.

Eine Weiterbildung der Verfahren und der Vorrichtungen sieht vor, dass der Datensatz durch ein (teilweises oder vollständiges) dreidimensionales Vermessen des Messobjekts erzeugt wird. Das dreidimensionale Vermessen kann umfassen, dass die dreidimensionale Gestalt und/oder dreidimensionale Form des Messobjekts zumindest teilweise, vorzugsweise aber vollständig erfasst wird. Dies kann zum Beispiel mittels Computertomografieverfahren erfolgen. Ein solches Vermessen ermöglicht eine umfassende und besonders präzise Eigenschaftsermittlung des Messobjekts und erhöht somit die Genauigkeit beim Zuordnen zu einer hierzu passenden Objektklasse. Insbesondere kann ein Datensatz erzeugt werden, der so genannte Voxel umfasst.

In einer weiteren Ausführungsform der Vorrichtungen und der Verfahren wird ein datenbasiertes Mustererkennungsverfahren durchgeführt, wobei das Messobjekt einer Objektklasse zugeordnet wird, wenn mindestens ein (für das oder bei dem Messobjekt und/oder in dessen Datensatz) erkanntes Muster einem objektklassenspezifischen Muster entspricht oder um nicht mehr als ein vorbestimmtes Maß davon abweicht. Das Muster kann allgemein zweidimensional oder dreidimensional definiert sein und/oder einer zweidimensionalen oder dreidimensionalen Form, Umriss oder Kontur entsprechen bzw. eine solche definieren. Alternativ oder zusätzlich kann das Muster durch Daten, z.B. Bildeigenschaften, definiert sein, die bei einem Erfassen des Messobjekts erhalten werden (zum Beispiel in einem Ergebnis- oder Auswertebild erhalten werden). Die Vermessungsergebnisse des Messobjekts, die zum Beispiel in Form eines Datensatzes zusammengefasst sein kann, können dahingehend überprüft werden, ob darin das entsprechende Muster erkannt wird oder, anders ausgedrückt, darin vorhanden ist. Verfahren zum Mustervergleich sind aus dem Stand der Technik bekannt und können zum Umsetzen der geschilderten Ausführungsform verwendet werden.

Das objektklassenspezifische Muster kann vorab definiert werden und vorzugsweise ebenfalls eine zweidimensionale oder dreidimensionale Form, Umriss oder Kontur beschreiben oder aber durch vorbestimmte Daten-, insbesondere Bildeigenschaften, definiert sein. Das vorbestimmte Maß kann zum Beispiel derart definiert sein, dass ein Flächenanteil und/oder ein allgemeiner Anteil des Musters, der von dem objektklassenspezifischen Muster abweicht, nicht über ein vorbestimmtes Maß hinaus von dem Muster abweichen darf (zum Beispiel nicht über einen vorbestimmten prozentualen Anteil an der Gesamtfläche des Musters hinaus).

Ein Vorteil der geschilderten Mustererkennung ist, dass eine Zuordnung des Messobjekts zu einer Objektklasse schnell und präzise und vorzugsweise auch im Wesentlichen oder vollständig automatisch realisiert werden kann.

Gemäß einer weiteren Variante der Verfahren und der Vorrichtungen ist die Zuordnung des Messobjekts oder des Teils des Messobjekts zu einer Objektklasse dimensionsunabhängig. Hingegen kann allgemein vorgesehen sein, dass diese Zuordnung nicht form- und/oder geometrieunabhängig ist. Die Dimensionsunabhängigkeit kann umfassen, dass keine konkreten Abmessungen (zum Beispiel in Form einer Länge, Höhe oder Breite) betrachtet werden, sondern beispielsweise lediglich Formen, Konturen und/oder Umrisse. Mit anderen Worten können skalierbare (d. h. in beliebiger Weise vergrößerbare und/oder verkleinerbare) Formen, Konturen und/oder Umrisse betrachtet werden oder eine entsprechende Skalierbarkeit angenommen werden. Werden, zum Beispiel basierend auf der vorstehenden Mustererkennung, die allgemein ebenfalls dimensionsunabhängig, z.B. auf Grundlage von dimensionsinvarianten Mustern, erfolgen kann, entsprechende Formen, Konturen, Umrisse oder anderweitige Geometriemerkmale in dem Messobjekt und/oder in der Objektklasse identifiziert, kann somit eine Zuordnung vorgenommen werden, obwohl diese Merkmale hinsichtlich ihrer Dimensionen oder Abmessungen voneinander abweichen. Stattdessen kann als maßgebliche Eigenschaft zur Vornahme einer entsprechenden Zuordnung allein die Form und/oder Geometrie des Messobjekts wie auch der Objektklasse betrachtet werden.

Mittels dieser Variante kann ermöglicht werden, dass die Anzahl der zu definierenden Objektklassen vermindert wird, da nicht für jede mögliche Abmessung eine eigene Objektklasse definiert werden muss. Ferner kann der im Rahmen der Zuordnung erforderlichen Berechnungsaufwand reduziert werden, beispielsweise da weniger Objektklassen und/oder aufgrund der nicht berücksichtigten Abmessungen weniger Informationen überprüft bzw. verglichen werden müssen.

Eine Weiterbildung der Verfahren und der Vorrichtungen sieht vor, dass der resultierende Prüfplan zumindest teilweise durch Anpassen des objektklassenspezifischen Prüfplans erzeugt wird, wobei das Anpassen des objektklassenspezifischen Prüfplans in Abhängigkeit eines Unterschieds zwischen dem Messobjekt und der Objektklasse (und/oder zwischen dem Messobjekt und einem objektklassenspezifischen Referenzobjekt) durchgeführt wird. Der Unterschied kann sich insbesondere auf einen dimensionellen Unterschied oder, anders ausgedrückt, einen Unterschied hinsichtlich der Abmessungen des Messobjekts und etwaigen zur Definition der Objektklasse verwendeten Dimensionen und/oder Abmessungen, insbesondere Dimensionen und/oder Abmessungen eines Referenzobjekts der Objektklasse, beziehen. Wird die Objektklasse anhand eines objektklassenspezifischen Referenzobjekts definiert oder kann ein solches Referenzobjekt auf Basis der Objektklasse definiert und/oder hergeleitet werden, kann der Unterschied auch zwischen dem Messobjekt und dem entsprechenden Referenzobjekt betrachtet werden (zum Beispiel basierend auf einen Vergleich dieser Objekte). Auch in diesem Fall können dimensionale Unterschiede und/oder Unterschiede hinsichtlich der Abmessungen betrachtet werden. Allgemein kann das Anpassen umfassen, dass ein ermittelter Unterschied im Wesentlichen oder vollständig ausgeglichen oder, mit anderen Worten, kompensiert wird.

Zusätzlich oder alternativ können Lage-, Orientierungs- und/oder Positionsunterschiede betrachtet werden. Eine Lage, Orientierung und/oder Positionierung des objektklassenspezifischen Prüfplans (bzw. der darin hinterlegten und/oder kodierten Informationen) kann nach Maßgabe eines entsprechenden ermittelten Unterschiedes geeignet angepasst werden, insbesondere derart, dass dieser Unterschied ausgeglichen oder kompensiert wird. Positionsunterschiede können zum Beispiel mittels einer Translation und Orientierungsunterschiede mittels einer Rotation ausgeglichen werden. Allgemein können in dem objektklassenspezifischen Prüfplan definierte Koordinaten oder Positionsinformationen somit entsprechend skaliert, transliert und/oder rotiert werden.

Dies kann in einem vorab festgelegten Referenzkoordinatensystem erfolgen. Hierzu kann es notwendig sein, entsprechende Koordinatentransformationen in das Referenzkoordinatensystem durchzuführen.

Das Anpassen ist besonders dann relevant, wenn die Zuordnung des Messobjekts zu einer Objektklasse dimensionsunabhängig erfolgt. In diesem Fall kann mittels des Anpassens des Prüfplans sichergestellt werden, dass dieser tatsächlich dazu geeignet ist, ein zum Beispiel gegenüber dem Referenzobjekt unterschiedlich dimensioniertes Messobjekt überprüfen zu können. Beispielsweise können Positionen von Messpunkten, die in dem oder anhand des Prüfplan(s) definiert werden, an die konkreten Abmessungen des Messobjekts angepasst werden.

Das Anpassen ermöglicht allgemein, dass die Anforderungen an das Vermessen des Messobjekts bzw. an die hierfür verwendete Messeinrichtung reduziert werden können, da nachträgliche Möglichkeiten zum Ausgleichen etwaiger Abweichungen geschaffen werden. Derartige Anforderungen können zum Beispiel die Anforderungen an die Positionier- und/oder Orientierungsgenauigkeit des Messobjekts in einem Messraum der Messeinrichtung betreffen. Weiterhin wird durch das Anpassen ermöglicht, dass nicht für sämtliche denkbare Varianten eines Messobjekts eigene Objektklassen definiert und mit entsprechend hohem Berechnungsaufwand im Rahmen eines Untersuchens von Zuordnungsmöglichkeiten überprüft werden müssen.

In diesem Zusammenhang kann ferner vorgesehen sein, dass eine geometrische Transformation zwischen dem Messobjekt oder Teil des Messobjekts und einem (die Objektklasse beschreibenden) Referenzobjekt, dem der (oder das dem) objektklassenspezifischen Prüfplan zugeordnet ist, bestimmt wird, wobei das Anpassen des objektklassenspezifischen Prüfplans in Abhängigkeit der Transformation durchgeführt wird. Allgemein kann der angepasste objektklassenspezifische Prüfplan als Teil des resultierenden Prüfplans gewählt werden oder diesen resultierenden Prüfplan bilden. Anders ausgedrückt kann das Anpassen gemäß jeglicher der vorstehenden Varianten derart erfolgen, dass der angepasste objektklassenspezifische Prüfplan unmittelbar als Teil von oder als der resultierende Prüfplan verwendet und abgearbeitet werden kann.

Die geometrische Transformation kann allgemein basierend auf und/oder nach Maßgabe des ermittelten Unterschiedes ausgeführt werden. Insbesondere kann die geometrische Transformation eine Skalierung (d. h. Vergrößerung oder Verkleinerung), Rotation und/oder Translation von in dem Prüfplan hinterlegten geometrischen Angaben oder Informationen (zum Beispiel in Form einer Position von Messpunkten) oder allgemein von Prüfplanelementen nach Maßgabe des ermittelten Unterschieds umfassen. Zusätzlich oder alternativ können entsprechende Angaben und Informationen auch nach Maßgabe eines ermittelten Lage-, Orientierungs- und/oder Positionsunterschieds angepasst werden, insbesondere in der Weise, dass Orientierungs- oder Positionsinformationen (zum Beispiel bezüglich in dem Prüfplan definierter Messpunkte oder -bereiche) in geeigneter Weise angepasst werden.

Weiter kann gemäß einer Variante der Verfahren und der Vorrichtungen der objektklassenspezifische Prüfplan in Abhängigkeit einer räumlichen Lage des Messobjekts angepasst werden. Bei der räumlichen Lage kann es sich um eine zweidimensionale und/oder dreidimensionale Lage handeln bzw. eine in einem zweidimensionalen und/oder dreidimensionalen Koordinatensystem, insbesondere im Referenzkoordinatensystem, definierten Lage. Eine solche Anpassung kann insbesondere Relativverdrehungen und/oder allgemeine Orientierungsunterschiede zwischen dem Messobjekt und der Objektklasse bzw. einem objektklassenspezifischen Referenzobjekt ausgleichen. Somit kann dann der Prüfplan dann unmittelbar für das Messobjekt in seiner aktuellen räumlichen Lage erzeugt werden. Das Anpassen des Prüfplans kann wiederum umfassen, das darin hinterlegte Orientierungs- oder Positionsinformationen (zum Beispiel bezüglich in dem Prüfplan definierter Messpunkte) in geeigneter Weise angepasst werden.

Die vorstehend geschilderten Varianten zum Anpassen der Prüfpläne erhöhen den Bedienungskomfort und reduzieren die für das Erstellen des resultierenden Prüfplans benötigte Zeit, da Benutzereingaben weniger umfangreich ausfallen oder sogar vollständig entfallen können. Stattdessen können relevante Unterschiede automatisch (d. h. im Wesentlichen unabhängig von Nutzereingaben) ermittelt und vorzugsweise auch automatisch kompensiert werden. Es kann aber auch vorgesehen sein, dass das Anpassen zumindest teilweise manuell ausgeführt wird, beispielsweise wenn ein Nutzer eine bevorzugte Orientierung angibt und der objektklassenspezifische Prüfplan darauf basierend angepasst wird.

Bei einer Weiterbildung der Verfahren und der Vorrichtungen werden aus dem resultierenden Prüfplan Messpunkte bestimmt und für das Messobjekt verifiziert, wobei der resultierende Prüfplan verifiziert wird, wenn die Messpunkte verifiziert wurden. Dieser resultierende Prüfplan kann als verifizierter resultierender Prüfplan bezeichnet werden. Das Verifizieren kann umfassen, dass auf dem Messobjekt nach in dem Prüfplan definierten Prüfelementen (zum Beispiel in Form dazugehöriger Messpunkte) gesucht wird. Das Suchen kann wiederum auf Basis einer Mustererkennung und/oder einer berührungslosen (z. B. optischen) oder taktilen Erfassung des Messobjekts basieren. Anders ausgedrückt kann ermittelt werden, ob in dem Prüfplan definierte Koordinaten von Prüfelementen und/oder Messpunkten (oder allgemein eine Orientierung- und/oder Positionsangabe von Prüfelementen und Messpunkten) tatsächlich auf dem Messobjekt liegen und/oder in vorbestimmten Bereichen des Messobjekts liegen. Wird hingegen festgestellt, dass an den relevanten Koordinaten freier Raum oder ein unerwarteter Bereich des Messobjekts vorliegt, kann der Messpunkt und somit auch der Prüfplan nicht verifiziert werden.

Mittels dieser Variante kann sichergestellt werden, dass ein zum Beispiel nach Maßgabe der vorstehenden Varianten angepasster Prüfplan auf das Messobjekt tatsächlich in der gewünschten Weise anwendbar ist. Somit kann sichergestellt werden, dass der Prüfplan an sich anwendbar ist und/oder mit einer ausreichenden Wahrscheinlichkeit eine gewünschte Mess- bzw. Überprüfungsgenauigkeit ermöglicht.

In diesem Zusammenhang kann ferner vorgesehen sein, dass für das Verifizieren in Abhängigkeit der Transformation vorbestimmte Positionsinformationen von Messpunkten genutzt werden. Anders ausgedrückt kann im Rahmen des Verifizierens untersucht werden, ob auf Basis der vorstehend geschilderten Transformation erhaltene Positionsinformationen von Messpunkten tatsächlich auf/an dem Messobjekt vorhandene Messpunkte kodieren. Dies kann wiederum ein Überprüfen dahingehend umfassen, ob die entsprechende Messpunkte tatsächlich auf dem Messobjekt oder in vorbestimmten Bereichen des Messobjekts liegen.

Bei einer Weiterbildung der Verfahren und der Vorrichtungen wird eine vorbekannte Zuordnung zwischen datenbasiert bestimmbaren Objekteigenschaften (des Messobjekts) und den Objektklassen und/oder eine vorbekannte Zuordnung zwischen Objektklassen und (objektklassenspezifischen) Prüfplänen in Abhängigkeit von Objekteigenschaften eines aktuell vermessenen Messobjekts (für welches der resultierende Prüfplan bestimmt wird) und/oder des einem solchen Messobjekt zugeordneten resultierenden Prüfplans angepasst. Somit kann/können die Zuordnung(en) eine adaptive Zuordnung sein. Anders ausgedrückt wird eine flexible oder, mit anderen Worten, lernfähige Anpassung (Adaption) der entsprechenden Zuordnungen ermöglicht. Das Anpassen kann zum Beispiel auf Basis eines vorstehend erläuterten festgestellten Unterschiedes erfolgen. Zusätzlich oder alternativ kann das Anpassen auf Basis einer durchgeführten Kompensation zum Ausgleichen dieses Unterschiedes erfolgen (beispielsweise auf Basis einer geometrischen Transformation). Wird zum Beispiel ermittelt, dass ein Messobjekt mit einer bestimmten Form unerwartet groß oder klein ist, kann der Prüfplan der dazugehörigen Objektklasse (d. h. der objektklassenspezifische Prüfplan) analog zu der vorstehend geschilderten Prüfplan-Skalierung angepasst werden. In der Folge ist dieser Objektklasse auch für die Zukunft ein entsprechend skalierter objektklassenspezifischer Prüfplan zugeordnet. Zusätzlich oder alternativ kann ermöglicht werden, dass die vorbekannten Zuordnungen entsprechend angepasst (adaptiert) werden, wenn ein Nutzer eine Zuordnung manuell vornimmt oder einen Prüfplan und/oder eine Objektklasse und/oder eine datenbasiert bestimmbare Objekteigenschaft manuell ändert, insbesondere wenn die vorbekannten von den durch den Nutzer vorgenommenen oder geänderten Zuordnungen abweichen.

In einer Ausführungsform der Verfahren und der Vorrichtungen ist ferner vorgesehen, dass in Abhängigkeit einer Objektklasse Messinformationen zum Vermessen des Messobjekts bestimmt und vorzugsweise einem Benutzer auch angezeigt werden. Insbesondere können in der Objektklasse Messinformationen hinterlegt sein, mit denen das Vermessen des Werkstücks nach Maßgabe des Prüfplans erleichtert und/oder die erzielbare Mess- bzw. Prüfgenauigkeit erhöht werden soll. Beispielsweise können die Messinformationen Hinweise für einen Nutzer umfassen, die eine geeignete Vermessung bzw. Überprüfung betreffen. Insbesondere können Hinweise hinsichtlich einer geeigneten Auf- bzw. Einspannung des Objekts, der zu verwendenden Messverfahren oder der zu berücksichtigenden Toleranzklassen als Messinformationen definiert und hinterlegt werden. Diese Messinformationen können einen Benutzer nach Maßgabe der ermittelten zugeordneten Objektklasse angezeigt werden, zum Beispiel auf einer Anzeigeeinrichtung eines herkömmlichen PCs und/oder einer nachfolgend erläuterten Vorrichtung.

In einer weiteren Ausführungsform wird das Verfahren als Simulation durchgeführt. Mit anderen Worten ist es möglich, dass ein das Messobjekt repräsentierender Datensatz durch eine Simulation eines Messverfahrens erzeugt wird. Hierzu kann z.B. ein Verfahren zur Erzeugung eines virtuellen Abbilds des Messobjekts angewendet werden. Ein solches Verfahren ist z.B. in der WO 2014/19130 A1 offenbart, auf deren Offenbarungsgehalt hiermit vollumfänglich Bezug genommen wird. Solche Verfahren ermöglichen insbesondere auch die Simulation von optischen oder taktilen Messverfahren.

Weiter vorgeschlagen wird ein Programm, welches, wenn es auf oder durch einen Computer oder eine Auswerteeinrichtung ausgeführt wird, den Computer veranlasst, einen, mehrere oder alle Schritte des in dieser Offenbarung dargestellten Verfahrens zur Erzeugung eines Prüfplans für die Prüfung eines Messobjekts durchzuführen. Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen codiert, die das Programm repräsentieren und welches Code-Mittel umfasst, die adaptiert sind, einen, mehrere oder alle Schritte des in dieser Offenbarung dargestellten Verfahrens zur Erzeugung eines Prüfplans für die Prüfung eines Messobjekts durchzuführen. Das Signal kann ein physikalisches Signal, zum Beispiel ein elektrisches Signal sein, welches insbesondere technisch oder maschinell erzeugt wird. Das Programm kann den Computer auch dazu veranlassen, den Prüfplan auszuführen d.h. eine Prüfung des Messobjekts gemäß dem Prüfplan auszuführen.

Weiter kann das Verfahren zur Erzeugung eines Prüfplans für die Prüfung eines Messobjekts ein computerimplementiertes Verfahren sein. So können zum Beispiel ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann zum Beispiel zumindest eine Recheneinrichtung, insbesondere ein Prozessor, und zum Beispiel zumindest eine Speichereinrichtung umfassen, um die Daten, insbesondere technisch, zu verarbeiten, zum Beispiel elektronisch und oder optisch. Ein Computer kann hierbei jede Art von Datenverarbeitungsgerät sein. Ein Prozessor kann ein halbleiterbasierter Prozessor sein.

Weiter betrifft die Erfindung eine Vorrichtung zum Erzeugen eines resultierenden Prüfplans für die Prüfung eines Messobjekts,
wobei die Vorrichtung mindestens eine Auswerteeinrichtung und mindestens eine Einrichtung zum Vermessen des Messobjekts umfasst,
wobei wenigstens ein Datensatz durch Vermessen des Messobjekts erzeugbar ist,
wobei datenbasiert das Messobjekt oder ein Teil des Messobjekts wenigstens einer Objektklasse zuordenbar ist, wobei als objektklassenspezifischer Prüfplan ein der Objektklasse zugeordneter Prüfplan bestimmbar ist,
wobei der resultierende Prüfplan in Abhängigkeit des objektklassenspezifischen Prüfplans bestimmbar ist.

Die Einrichtung zum Vermessen des Messobjekts kann als ein Koordinatenmessgerät (KMG) realisiert sein oder ein solches umfassen. Diese Einrichtung kann auch die Auswerteeinrichtung, insbesondere eine Recheneinrichtung, weiter insbesondere mit mindestens einem Mikrocontroller, umfassen. Der Datensatz kann mittels der Einrichtung zum Vermessen erzeugt werden, beispielsweise von einer Steuereinrichtung oder aber der Auswerteeinrichtung hiervon, die jeweils über eine entsprechende Datenerzeugungsfunktion verfügen können. Die Auswerteeinrichtung kann auf diesen Datensatz zugreifen, um die weiteren Verfahrensschritte oder -maßnahmen durchzuführen. Auch das Zuordnen des Messobjekts zu einer Objektklasse kann mittels einer Steuereinrichtung der Einrichtung zum Vermessen (zum Beispiel basierend auf etwaigen Zuordnungsfunktionen hiervon) ausgeführt werden. Alternativ kann die Zuordnung mittels der Auswerteeinrichtung oder aber benutzergesteuert erfolgen. Das Bestimmen des resultierenden Prüfplans kann ebenfalls mittels der Auswerteeinrichtung oder aber der Steuereinrichtung der Einrichtung zum Vermessen erfolgen (welche jeweils über eine entsprechende Bestimm- oder Festlegefunktion verfügen können). Ferner kann die Auswerteeinrichtung oder aber die Steuereinrichtung der Einrichtung zum Vermessen dazu eingerichtet sein, eine Mustererkennung der vorstehend geschilderten Art auszuführen.

Übergeordnet kann die Vorrichtung auch eine (vorzugsweise elektronische und/oder digitale) Speichereinrichtung umfassen, zum Beispiel um darin wenigstens eine der folgenden Informationen abzuspeichern: die Messergebnisse, den Datensatz, die Objektklasse(n), wenigstens einen objektklassenspezifischen Prüfplan, etwaige Muster für eine Mustererkennung und/oder die für Mustererkennung erforderlichen Programmanweisungen, den resultierenden Prüfplan.

Allgemein kann die Vorrichtung jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann die Vorrichtung dazu eingerichtet sein, ein Verfahren gemäß jeglichem der vorstehenden oder nachstehenden Aspekte auszuführen.

Die Erfindung betrifft auch ein Verfahren zum Prüfen eines Messobjekts, wobei ein Prüfplan mit einem Verfahren gemäß einem der vorangehenden Aspekte erzeugt und wobei das Messobjekt gemäß dem Prüfplan geprüft wird. Das Prüfen kann mittels einer Messeinrichtung zum Beispiel in Form eines Koordinatenmessgeräts ausgeführt werden. Insbesondere kann das Prüfen ein Vermessen des Messobjekts gemäß in dem Prüfplan definierter Vorschriften umfassen. Folglich kann das Prüfen auch ein Ansteuern von einer zur Messobjektvermessung verwendeten Messeinrichtung nach Maßgabe des Prüfplans umfassen, insbesondere nach Maßgabe von in dem Prüfplan definierten und/oder kodierten Messvorschriften oder -anweisungen. Dieses Ansteuern kann mittels einer geeigneten Steuereinrichtung erfolgen.

Insbesondere können im Rahmen dieses Verfahrens, wie vorhergehend bereits erläutert, auf Grundlage des Prüfplans zu erfassende Messpunkte des Messobjekts festgelegt werden. Diese können dann bei der Vermessung erfasst werden. Auf Grundlage der Messpunkte können dann, wie vorhergehend ebenfalls bereits erläutert, die Prüfmerkmale erfasst werden. Weiter können Prüfkriterien auf Grundlage dieser Prüfmerkmale ausgewertet werden, beispielsweise durch sogenannte schwellenwertbasierte Verfahren.

Schließlich betrifft die Erfindung eine Vorrichtung zum Prüfen eines Messobjekts, wobei ein Prüfplan mit einem Verfahren gemäß einem der vorangehenden Aspekte erzeugbar ist, wobei die Vorrichtung mindestens eine (z.B. elektronisch und/oder digital betreibbare) Steuereinrichtung zum Durchführen des Prüfplans umfasst und wobei das Messobjekt gemäß dem Prüfplan prüfbar ist und/oder geprüft wird (z.B. durch das Ausführen des Prüfplans mittels der Steuereinrichtung). Die Steuereinrichtung kann zum Beispiel dazu ausgelegt sein, Programmanweisungen zum Durchführen des Prüfplans einzulesen und/oder auszuführen (oder aber den Prüfplan als solches einzulesen und/oder auszuführen). Hierfür kann die Steuereinrichtung eine geeignete Schnittstelleneinheit und/oder Datenverbindung umfassen, beispielsweise zu einer vorstehend erläuterten Auswerteeinrichtung. Insbesondere kann die Steuereinrichtung eine Prozessoreinheit umfassen, auf der zum Beispiel ein Computerprogrammprodukt der vorstehend erläuterten Art hinterlegt und/oder ausführbar ist. Die Steuereinrichtung kann allgemein dazu eingerichtet sein, eine Messeinrichtung und/oder eine Auswerteeinrichtung der vorstehend erläuterten Art nach Maßgabe des Prüfplans anzusteuern und/oder zu betreiben. Übergeordnet kann die Steuereinrichtung somit das Durchführen des Prüfplans veranlassen sowie den damit einhergehenden Messablauf steuern. Das Durchführen des Prüfplans kann insbesondere umfassen, dass vorbestimmte Messpunkte auf dem Messobjekt ausgewählt und erfasst bzw. vermessen werden.

Auch das vorstehende Verfahren und die Vorrichtung zum Prüfen des Messobjekts können sämtliche Weiterbildungen, Ausführungsformen und Aspekte umfassen, die bezüglich der entsprechenden gleichlautenden Merkmale vorstehend oder nachstehend erläutert sind.

Im Folgenden wird eine Ausführungsform der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Prinzipskizze einer ersten erfindungsgemäßen Vorrichtung, mit der ein erstes erfindungsgemäßes Verfahren ausführbar ist;
- Fig. 2:: ein Ablaufschema des ersten erfindungsgemäßen Verfahrens;
- Fig. 3A-3B:: ein Beispiel für ein Messobjekt und ein objektklassenspezifisches Referenzobjekt, wobei Prüfpläne durch Skalierung angepasst werden;
- Fig. 4A-4B:: ein weiteres Beispiel für ein Messobjekt und ein objektklassenspezifisches Referenzobjekt, wobei nur für Teile des Messobjekts Objektklassen zugeordnet werden;
- Fig. 5A-5B:: ein weiteres Beispiel für ein Messobjekt und ein objektklassenspezifisches Referenzobjekt, wobei nur für Teile des Messobjekts Objektklassen zugeordnet werden;
- Fig. 6: eine Ansicht einer zweiten erfindungsgemäßen Vorrichtung, mit der ein zweites erfindungsgemäßes Verfahren ausführbar ist; und
- Fig. 7: ein Ablaufschema des zweiten erfindungsgemäßen Verfahrens.

Nachfolgend bezeichnen gleiche Bezugszeichen Elemente mit gleichen oder ähnlichen technischen Merkmalen.

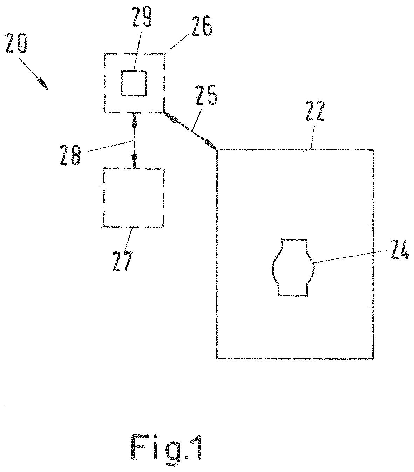

Die in Fig. 1 schematisch stark vereinfachte erste Vorrichtung 20 umfasst eine Einrichtung 22 zum vorzugsweise dreidimensionalen Vermessen eines Messobjekts 24. Die Einrichtung 22 wird im Folgenden auch als Vermessungseinrichtung 22 bezeichnet. Die Vermessungseinrichtung 22 dient prinzipiell dazu, in einem anfänglichen Verfahrensstadium das Messobjekt 24 dreidimensional zu vermessen und insbesondere dessen dreidimensionale Form zu bestimmen. In dem gezeigten Beispiel ist die Vermessungseinrichtung 22 hierfür als ein industrieller Computertomograph ausgebildet.

Bei dem Messobjekt 24 handelt es sich um ein beliebiges Werkstück, für das in den nachfolgenden weiteren Figuren noch konkrete Beispiele gezeigt sind.

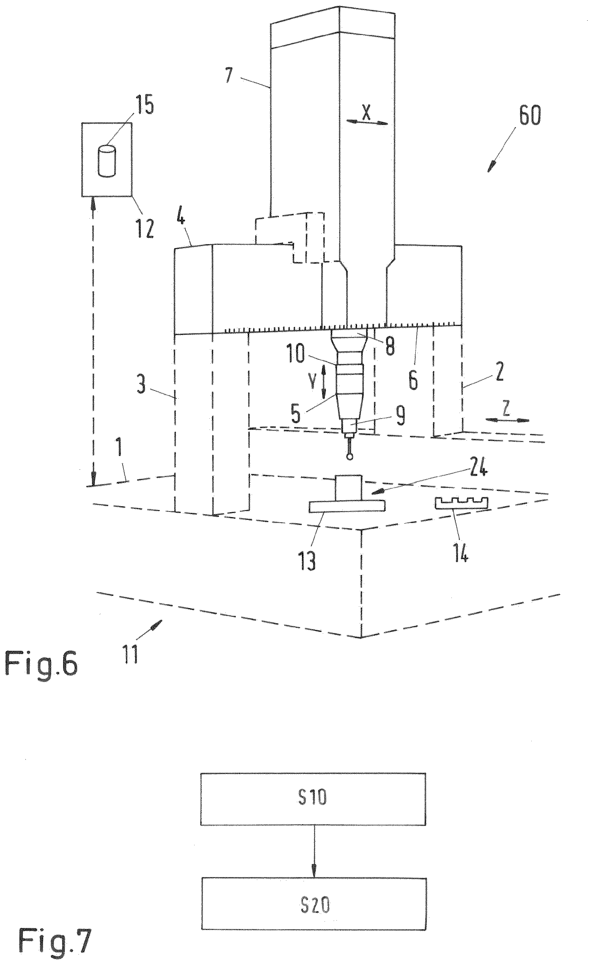

In dem gezeigten Fall dient die Vorrichtung 20 dazu, einen resultierenden Prüfplan durch Vermessen und Zuordnen des Messobjekts 24 zu einer vorbestimmten Objektklasse zu erzeugen. Hingegen ist die Vorrichtung 20 nicht dafür vorgesehen, auch Prüfpläne durch Vermessen einzelner Messpunkte auf dem Messobjekt 24 abzuarbeiten, was aber ebenso vorgesehen sein kann. Stattdessen wird zum Abarbeiten des Prüfplans für das Messobjekt 24 ein nicht dargestelltes Koordinatenmessgerät verwendet. Ein Beispiel für ein solches Koordinatenmessgerät findet sich in der nachstehend diskutierten Figur 6.

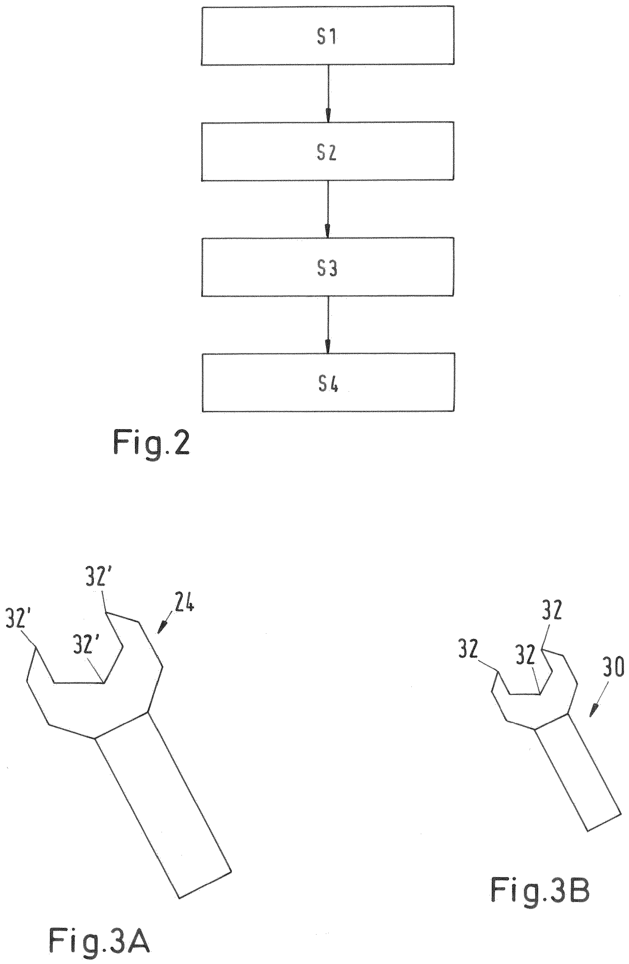

Die Vorrichtung 20 aus Figur 1 umfasst auch eine Auswerteeinrichtung 26, die als herkömmlicher PC realisiert ist oder von einem solchen umfasst sein kann. Die Auswerteeinrichtung 26 umfasst eine Prozessoreinheit 29, um ein Programmanweisungen eines Computerprogrammprodukts und somit das Verfahren gemäß der nachstehenden Figur 2 ausführen zu können. Hierfür stellt Auswerteeinrichtung 26 ferner eine Datensatzerzeugungs-, Objektklassenzuordnungs-, Prüfplanbestimm- und resultierender-Prüfplanbestimmfunktion sowie optional auch eine Prüfplananpassungsfunktion bereit. Die Auswerteeinrichtung 26 ist über eine (kabelgebundene oder kabellose) Datenverbindung 25 datenübertragend mit der Vermessungseinrichtung 22 verbunden.

Die Vorrichtung 20 umfasst auch eine Speichereinrichtung 27, welche ebenfalls von dem PC umfasst sein kann, der auch die Auswerteeinrichtung 26 umfasst oder bildet. Alternativ kann die Auswerteeinrichtung 26 selbst eine entsprechende Speichereinrichtung 27 umfassen. Die Speichereinrichtung 27 ist über eine (kabelgebundene oder kabellose) Datenverbindung 28 datenübertragend mit der Auswerteeinrichtung 26 verbunden. In der Speichereinrichtung 27 sind Datensätze hinterlegt, mittels denen mehrere Objektklassen definiert werden. Die Datensätze können zum Beispiel Informationen bezüglich geometrischer Eigenschaften einer jeweiligen Objektklasse enthalten, wie zum Beispiel vorbestimmte objektklassenspezifische dreidimensionale Formen. Ferner umfassen die Datensätze je Objektklasse einen objektklassenspezifischen Prüfplan. Anders ausgedrückt ist jede Objektklasse mit einem (vorzugsweise einem einzigen) dazugehörigen objektklassenspezifischen Prüfplan verknüpft, der von der Auswerteeinrichtung 26 ausgelesen und gegebenenfalls in der nachstehend erläuterten Weise angepasst werden kann.

In Figur 1 nicht gesondert gezeigt ist wenigstens eine optionale Eingabeeinrichtung der Vorrichtung 20 für Nutzereingaben, beispielsweise in Form eines Touchscreens, einer berührungsempfindlichen Eingabefläche (zum Beispiel in Form einer berührungsempfindlichen Anzeigeeinrichtung), einer Tastatur, eines Joysticks oder einer Maus. Derartige Eingabeeinrichtungen können für jegliche der vorstehenden oder nachstehenden optionalen Benutzereingaben verwendet werden.

In Figur 2 ist ein Ablaufschema eines erfindungsgemäßen Verfahrens gezeigt, wie es mit der Vorrichtung 20 aus Figur 1 ausführbar ist. In einem ersten Schritt S1 wird das Messobjekt 24 dreidimensional Vermessen und wird ein Datensatz durch die Auswerteeinrichtung 26 erzeugt, indem die dreidimensionalen Eigenschaften (d. h. insbesondere die geometrischen Eigenschaften) basierend auf den gewonnenen Messergebnissen zusammengefasst sind. Dieser Datensatz kann zum Beispiel die Form des Messobjekts 24 beschreiben oder angeben oder aber Informationen enthalten, aus denen sich gewünschte Eigenschaften rekonstruieren lassen.

In einem Schritt S2 nimmt die Auswerteeinrichtung 26 (basierend auf dem erstellten Datensatz) einen datenbasierten Vergleich zwischen den ermittelten Eigenschaften des Messobjekts 24 und den in der Speichereinrichtung 27 für die einzelnen Objektklassen hinterlegten Eigenschaften bzw. diese Objektklassen spezifizierenden Eigenschaften vor. Wird hierbei eine ausreichende Übereinstimmung erkannt, wird das Messobjekt 24 (oder, wie nachstehend erläutert, lediglich ein Teil hiervon) der entsprechenden Objektklasse zugeordnet.

In dem Schritt S3 wird von der Auswerteeinrichtung 26 der ebenfalls in der Speichereinrichtung 27 hinterlegte objektklassenspezifische Prüfplan für eben diejenige Objektklasse ermittelt und ausgelesen, welche dem Messobjekt 24 zugeordnet wurde.

In dem Schritt S4 wird für das Messobjekt 24 daraufhin ein resultierender Prüfplan basierend auf oder, mit anderen Worten, in Abhängigkeit dieses objektklassenspezifischen Prüfplans bestimmt. Beispiele für eine entsprechende Bestimmung des resultierenden Prüfplans, einschließlich etwaiger hierfür von der Auswerteeinrichtung 26 ausgeführter Anpassungen, werden nachstehend anhand der weiteren Figuren erläutert.

Der resultierende Prüfplan kann daraufhin einem nicht dargestellten Messgerät zur Verfügung gestellt werden, um das Messobjekt 24 nach Maßgabe der in dem Prüfplan definierten Vorschriften (bzw. der dort definierten oder daraus herleitbaren Messpunkte) zu vermessen. Bei diesem Messgerät kann es sich um das Koordinatenmessgerät 60 aus Figur 6 handeln.

In Figur 3A ist ein Beispiel für ein vermessenes Messobjekt 24 in Form eines Gabelschlüssels gezeigt. In Figur 3B ist hingegen ein Beispiel für ein Referenzobjekt 30 gezeigt, welches die in einer dazugehörigen Objektklasse definierten Eigenschaften aufweist bzw. eine entsprechende Objektklasse definiert. Das Referenzobjekt 30 ist ebenfalls als Gabelschlüssel ausgebildet. Allgemein kann es sich bei dem Referenzobjekt 30 um ein rein virtuelles Objekt handeln, dass zum Beispiel von einem Nutzer erstellt oder definiert wird (beispielsweise per CAD [Computer Aided Design]), oder aber um ein reales Objekt, das zum Definieren einer Objektklasse vermessen wird. Anschließend können auf Basis des entsprechenden virtuellen oder realen Referenzobjekts automatisch, semi-automatisch oder manuell Eigenschaften abgeleitet und/oder ausgewählt werden, um die Objektklasse zu definieren.

In dem gezeigten Beispiel wird die dreidimensionale Form des Referenzobjekt 30 in einem Datensatz zusammengefasst oder, anders ausgedrückt, beschrieben, wobei dieser Datensatz auch zur Definition einer zu dem Referenzobjekt 30 gehörigen Objektklasse verwendet wird. Anders ausgedrückt wird die Objektklasse 30 somit auf Basis des Referenzobjekts 30 formspezifisch definiert und betrifft einen Gabelschlüssel 30, wie in Figur 3B gezeigt. Dabei versteht es sich, dass in der Speichereinrichtung 27 aus Figur 1 auch mehrere Objektklassen hinterlegt sein können, die zum Beispiel verschiedene Varianten bzw. Formen von Gabelschlüsseln oder aber anderer Werkzeuge beschreiben.

Die Eigenschaften von sowohl dem Messobjekt 24 als auch dem Referenzobjekt 30 bzw. der dazugehörigen Objektklasse können insbesondere in Form von (vorzugsweise dreidimensionalen) Mustern vorliegen oder in Form solcher Muster zusammengefasst oder definiert werden. Wie vorstehend geschildert, können die Muster zweidimensionalen oder dreidimensionale Formen, Umrisse oder Konturen beschreiben oder aber allgemeine Bildeigenschaften, die in einem Ergebnisbild beim Erfassen und/oder Vermessen eines Objekts 24, 30 erhalten werden. Die Auswerteeinrichtung 26 kann dann mittels bekannter Bildauswerte- und/oder Mustererkennungsalgorithmen überprüfen, ob Muster einer Objektklasse und auch in einem Messobjekt erkannt werden bzw. darin vorliegen. Ist dies der Fall, kann das Messobjekt der entsprechenden Objektklasse zugeordnet werden.

Prinzipiell kann auch vorgesehen sein, dass neben der Form die konkreten Abmessungen (d. h. die Dimensionen) des Referenzobjekts 30 erfasst und der Definition der dazugehörigen Objektklasse zugrunde gelegt werden. In dem gezeigten Beispiel ist dies aber nicht vorgesehen. Stattdessen wird die Objektklasse dimensionsunabhängig und allein formspezifisch definiert. Entsprechend erkennt man in Figur 3A auch, dass das Messobjekt 24 zwar eine identische Form wie das Referenzobjekt 30 aufweist, jedoch deutlich größer als dieses ist (d. h. insbesondere länger und breiter ist). Dennoch ordnet die Auswerteeinrichtung 26 das Messobjekt 24 der zu dem Referenzobjekt 30 gehörigen Objektklasse aufgrund der übereinstimmenden Form zu, wobei diese Übereinstimmung zum Beispiel auf Basis der geschilderten Mustererkennung erkannt wird.

Für die Objektklasse des Referenzobjekts 30 ist auch ein objektklassenspezifischer Prüfplan angegeben, in dem Prüfmerkmale samt zugehöriger zu überprüfender Messpunkte definiert sind und/oder aus denen sich derartige Messpunkte ableiten lassen. In Figur 3A sind Beispiele für drei entsprechende Messpunkte 32 gezeigt. Koordinaten bzw. Positionsinformationen für diese Messpunkte 32 sind in einem Objektkoordinatensystem definiert und in dem objektklassenspezifischen Prüfplan hinterlegt.

Aufgrund des Größenunterschiedes zwischen dem Messobjekt 24 und dem Referenzobjekt 30 können diese Messpunkte aber nicht ohne weiteres auch auf das Messobjekt 24 angewandt werden. Stattdessen muss der Prüfplan (beziehungsweise die darin hinterlegten Positionsinformationen der Messpunkte 32) angepasst und in dem gezeigten Fall geometrisch transformiert werden. Die geometrische Transformation betrifft dabei eine Skalierung und konkret eine Vergrößerung des Referenzobjekts 30 (bzw. von dessen dazugehörigen Prüfplan und/oder der darin definierten Positionsinformationen), um diesen Größenunterschied auszugleichen. Hierfür kommen verschiedene an sich bekannte mathematische Ansätze infrage.

Im Ergebnis wird somit auf Basis des objektklassenspezifischen Prüfplans ein angepasster resultierender Prüfplan erhalten, in dem die Positionsinformationen der Messpunkte 32 des objektklassenspezifischen Prüfplans angepasst wurden, um resultierende Positionsinformationen bzw. Messpunkte 32` zu erhalten (siehe Figur 3A).

Es versteht sich, dass auch andere in dem objektklassenspezifischen Prüfplan hinterlegte Informationen und insbesondere geometrischen Informationen gemäß der vorgenommenen Skalierung angepasst werden können. Ferner kann auch vorgesehen sein, einen etwaigen Orientierungsunterschied zwischen dem Messobjekt 24 in dem Referenzobjekt 30 zu betrachten, beispielsweise in einem Maschinenkoordinatensystem. Auch in diesem Fall kann mittels an sich bekannter mathematische Ansätze eine Transformation ausgeführt werden, um Positionsinformation der Messpunkte 32 zu resultierenden Positionsinformationen bzw. Messpunkten 32` geeignet anzupassen und den Orientierungsunterschied vorzugsweise zu kompensieren.

Ferner können zumindest einzelne der transformierten Messpunkte 32` vor einem Abarbeiten bzw. Durchführen des Prüfplans zunächst verifiziert werden. Dies kann beispielsweise dadurch erfolgen, dass ein den Prüfplan durchführendes Messgerät (siehe zum Beispiel Koordinatenmessgerät 60 in Figur 6) zunächst ermittelt, ob an den transformierten Messpunkten 32` tatsächlich das zu vermessende Messobjekt 24 vorhanden ist (d. h. ob dort Masse vorhanden ist oder leerer Raum). Ist dies der Fall, kann der resultierende Prüfplan als verifizierter resultierender Prüfplan bezeichnet und abgearbeitet werden.

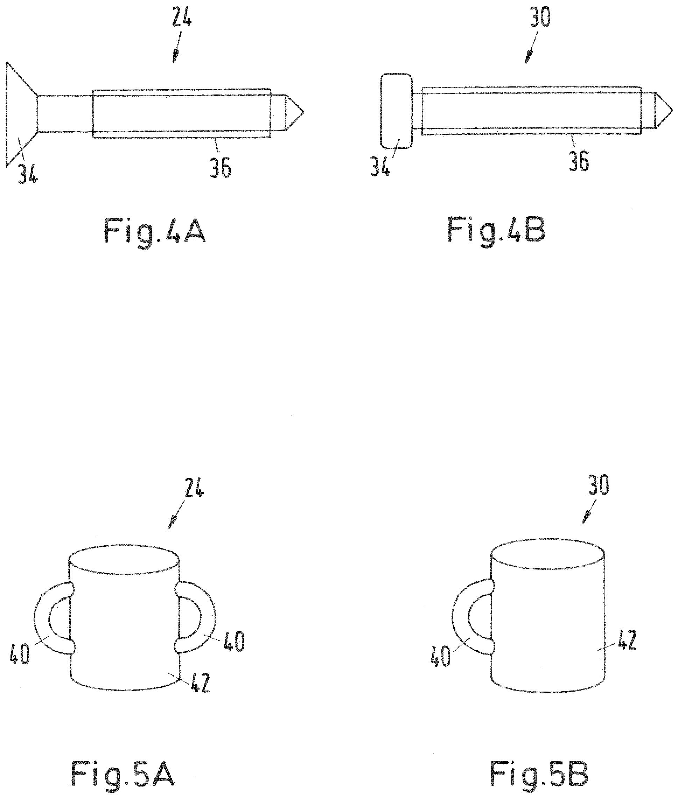

Anhand der Figuren 4A und 4B wird im Folgenden ein Beispiel erläutert, bei dem nur für einzelne Teile eines Messobjekts 24 eine Zuordnung zu Objektklassen erfolgt. In Figur 4A ist ein Messobjekt 24 in Form einer Gewindeschraube gezeigt. Das Messobjekt 24 umfasst demnach einen Kopfabschnitt 34 und einen Gewindeabschnitt (bzw. Schaft) 36. In Figur 4B ist ein eine Objektklasse definierendes Referenzobjekt 30 gezeigt. Dieses umfasst ebenfalls einen Kopfabschnitt 34 und auch einen Gewindeabschnitt 36.

Aus einem Vergleich der Figuren 4A und 4B verdeutlicht sich, dass die Kopfabschnitte 34 voneinander abweichen und die Gewindeabschnitte 36 unterschiedlich groß ausfallen. Genauer gesagt weisen die Kopfabschnitte 34 voneinander abweichende Formen auf und der Gewindeabschnitt 36 in Figur 4B ist länger als derjenigen in Figur 4A. Auch in diesem Fall würde das Messobjekt 24 zunächst vermessen werden, um dessen dreidimensionale Form zu ermitteln und in einem Datensatz abzuspeichern. Allerdings ist in diesem Fall die Auswerteeinrichtung 26 aus Figur 1 dazu eingerichtet, auch lediglich Übereinstimmungen von einem Teil des Messobjekts 24 mit einer Objektklasse bzw. einem eine Objektklasse definierenden Referenzobjekt 30 festzustellen.

Konkret ist die Auswerteeinrichtung 26 dazu eingerichtet, festzustellen, dass keine Übereinstimmung zwischen den Formen der Kopfabschnitte 34 des Messobjekts 24 und des Referenzobjekts 30 vorliegt. Andererseits kann die Auswerteeinrichtung 26 eine Formübereinstimmung hinsichtlich der Gewindeabschnitte 36 feststellen, auch wenn diese unterschiedlich bemessen sind.

Im Detail stellt jeder Teil des Referenzobjekts 30 in Form des Kopfabschnitts 34 und des Gewindeabschnitts 36 eine eigene Objektklasse oder auch Objektunterklasse dar, der jeweils ein entsprechend objektklassenspezifischer bzw. objektunterklassenspezifischer Prüfplan zugeordnet ist. Die Auswerteeinrichtung 26 ist prinzipiell dazu eingerichtet, dem Messobjekt 24 mehrere Objektklassen samt dazugehöriger Prüfpläne zuzuordnen. In dem gezeigten Fall würde die Auswerteeinrichtung 26 lediglich einen den Gewindeabschnitt 36 betreffenden Prüfplan für das Erstellen des resultierenden Prüfplans auswählen und analog zu dem vorstehenden Beispiel skalieren, wobei der Gewindeabschnitt 36 eine entsprechend eigene Objektklasse darstellt. Für den Kopfabschnitt 34, der ebenfalls eine eigene Objektklasse darstellt, würde die Auswerteeinrichtung 26 hingegen keine Übereinstimmung feststellen und somit auch keinen dazugehörigen Prüfplan für das Erstellen des resultierenden Prüfplans ermitteln.

In den Figuren 5A und 5B ist ein weiteres Beispiel gezeigt, bei dem verschiedenen Teilen eines Messobjekts 24 verschiedene Objektklassen zugeordnet werden können. Man erkennt, dass das Messobjekt 24 gemäß Figur 5A als eine Tasse mit zwei Henkeln 40 ausgebildet ist. Genauer gesagt besteht die Tasse aus einem zylindrischen Körper 42, an dessen Außenseite und in einander gegenüberliegenden Positionen zwei Henkel 40 angeordnet sind. Das Referenzobjekt 30 ist hingegen als Tasse mit lediglich einem Henkel 40 definiert. In diesem Fall können jedoch der Henkel 40 und der Körper 42 des Referenzobjekt 30 jeweils eigene Objektklassen definieren oder aber als Objektunterklassen einer Objektklasse, welche Tassen betrifft, definiert sein.

Unabhängig von der konkret gewählten Variante ist die Auswerteeinrichtung 26 dazu eingerichtet, zum Beispiel mittels Mustererkennungsverfahren zu ermitteln, dass das Messobjekt 24 Teile oder Bereiche umfasst, die den entsprechenden Objektklassen des Referenzteils 30 zuzuordnen sind. Genauer gesagt ermittelt die Auswerteeinrichtung 16, dass bei dem Messobjekt 24 zwei Henkel 40 vorhanden sind und ein Körper 42, dadurch, dass sowohl die die Henkel 40 beschreibenden Muster als auch das den Körper 42 beschreibende Muster erkannt werden. Diese jeweiligen Muster können auch als objektklassenspezifische Muster bezeichnet werden. Die entsprechenden objektklassenspezifischen Prüfpläne, die für das Referenzobjekt 30 bzw. dessen Henkel 40 und den Körper 42 hinterlegt sind, können dann auf die entsprechenden Teile oder Bereiche des Messobjekts 24 angewandt werden (d. h. der resultierende Prüfplan umfasst einen ersten Prüfplan (oder Teilprüfplan) für die Henkel 40 und einen zweiten Prüfplan (oder Teilprüfplan) für den Körper 42).

In sämtlichen der vorstehenden Varianten kann alternativ zu einer Zuordnung des Messobjekts 24 oder zumindest Teilen hiervon zu Objektklassen auch eine manuelle Zuordnung durch einen Nutzer vorgesehen sein. In diesem Fall kann die Auswerteeinrichtung 26 optional Vorschläge für geeignete Objektklassen unterbreiten, welche analog zu der vorstehenden Weise aus einem Vergleich zwischen den vermessenen Eigenschaften des Messobjekts 24 und den eine Objektklasse definierenden Eigenschaften (bzw. Eigenschaften eines dazugehörigen Referenzobjekt 30) ermittelt werden können.

In Figur 6 ist eine zweite erfindungsgemäße Vorrichtung 11 gezeigt, die ein Messgerät in Form eines Koordinatenmessgeräts (KMG) 60 umfasst. Das KMG 60 dient allgemein dazu, einen resultierenden Prüfplan für ein Messobjekt 24 abzuarbeiten bzw. das Objekt 24 nach Maßgabe dieses Prüfplans zu vermessen. In an sich prinzipiell bekannter Weise ist das KMG 60 in Portalbauweise ausgebildet und umfasst einen Messtisch 1, über dem Säulen 2, 3 verfahrbar sind, die zusammen mit einem Querträger 4 ein Portal des KMG 60 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einem Messsensor 5 verbunden ist. An dem Messsensor 5 ist ein taktil abtastender Tastkopf 9 abnehmbar angeordnet. Anstelle des Tastkopfs 9 könnte der Messsensor 5 ebenso einen berührungslos abtastenden Sensor umfassen, insbesondere einen Lasersensor.

Auf dem Messtisch 1 ist ein zusätzlicher drehbarer Messtisch 13 angeordnet, auf dem ein nach Maßgabe eines Prüfplans zu vermessendes Messobjekt 24 angeordnet ist, welches durch Drehung des Messtisches 13 um eine vertikale Drehachse gedreht werden kann. Ferner ist auf dem Messtisch 1 ein Magazin 14 angeordnet, in dem verschiedene Tastköpfe angeordnet werden können, die gegen den Tastkopf 9 ausgetauscht werden können, oder in dem verschiedene Taststifte angeordnet werden können, die gegen den von dem Tastkopf 9 getragenen Taststift ausgetauscht werden können.

Ferner zeigt Fig. 6 schematisch eine Steuereinrichtung 12 des KMG 60, die beispielsweise durch einen Computer realisiert werden kann, der über Software und zumindest einen Datenspeicher 15 verfügt und der über Signal- und Steuerleitungen mit ansteuerbaren Komponenten des Koordinatenmessgerätes 60 verbunden ist, insbesondere mit Antrieben. Außerdem ist die Steuereinrichtung 12 über eine Messdatenverbindung mit denjenigen Elementen des KMG 60 verbunden, die zur Ermittlung von auf Basis des Prüfplans gewonnenen Messwerten eingesetzt werden. Da derartige Elemente und Einrichtungen auf dem Gebiet von Koordinatenmessgeräten 60 allgemein bekannt sind, wird hier nicht näher darauf eingegangen.

Die Steuereinrichtung 12 erhält einen resultierenden Prüfplan für ein gemäß diesem Prüfplan zu vermessendes Messobjekt 24. Beispielsweise kann die Auswerteeinrichtung 26 aus Figur 1 über eine nicht gesondert dargestellte Datenverbindung den gemäß dem vorstehenden Verfahren erzeugten resultierenden Prüfplan an die Steuereinrichtung 12 aus Figur 6 übermitteln. Die Steuereinrichtung 12 ist dazu eingerichtet, das KMG 60 nach Maßgabe dieses Prüfplans anzusteuern und/oder zu betreiben. Insbesondere ist die Steuereinrichtung 12 dazu eingerichtet, die in dem resultierenden Prüfplan definierten oder daraus herleitbaren Messpunkten 32` (vgl. Figur 4A) zu identifizieren und das KMG 60 zum Erfassen bzw. Vermessen dieser Messpunkte 32` anzusteuern. Die resultierenden Messergebnisse können in dem Datenspeicher 15 gespeichert und einer weiteren Auswertung zugrunde gelegt werden.

In Figur 7 ist ein Ablaufschema für das von der Vorrichtung 11 durchgeführte Verfahren gezeigt. In dem Schritt S10 wird ein resultierender Prüfplan erzeugt (beispielsweise mittels dem anhand von Figur 2 erläuterten Verfahren und/oder Mittels der Auswerteeinrichtung 26 aus Figur 1). In dem Schritt S20 wird dieser resultierende Prüfplan dann von dem KMG 60 aus Figur 6 durchgeführt bzw. abgearbeitet.

## Patentansprüche

1. Verfahren zum Erzeugen eines resultierenden Prüfplans für die Prüfung eines Messobjekts (24),
wobei wenigstens ein Datensatz durch Vermessen des Messobjekts (24) erzeugt wird,
wobei datenbasiert das Messobjekt (24) oder ein Teil des Messobjekts (24) wenigstens einer Objektklasse zugeordnet wird,
wobei als objektklassenspezifischer Prüfplan ein der Objektklasse zugeordneter Prüfplan bestimmt wird, und
wobei der resultierende Prüfplan in Abhängigkeit des objektklassenspezifischen Prüfplans bestimmt wird,
**dadurch gekennzeichnet, dass**
eine vorbekannte Zuordnung zwischen datenbasiert bestimmbaren Objekteigenschaften und den Objektklassen und/oder eine vorbekannte Zuordnung zwischen Objektklassen und Prüfplänen in Abhängigkeit von Objekteigenschaften eines aktuell vermessenen Messobjekts (24) und/oder des dem Messobjekt (24) zugeordneten resultierenden Prüfplans angepasst wird.

2. Verfahren nach Anspruch 1,
**dadurch gekennzeichnet, dass** der Datensatz durch ein dreidimensionales Vermessen des Messobjekts (24) erzeugt wird.

3. Verfahren nach einem der vorangegangenen Ansprüche,
**dadurch gekennzeichnet, dass** ein datenbasiertes Mustererkennungsverfahren durchgeführt wird, wobei das Messobjekt (24) einer Objektklasse zugeordnet wird, wenn mindestens ein erkanntes Muster einem objektklassenspezifischem Muster entspricht oder um nicht mehr als ein vorbestimmtes Maß davon abweicht.

4. Verfahren nach einem der vorangegangenen Ansprüche,
**dadurch gekennzeichnet, dass** die Zuordnung des Messobjekts (24) oder des Teils des Messobjekts zu einer Objektklasse dimensionsunabhängig ist.

5. Verfahren nach einem der vorangegangenen Ansprüche,
**dadurch gekennzeichnet, dass** der resultierende Prüfplan zumindest teilweise durch Anpassen des objektklassenspezifischen Prüfplans erzeugt wird, wobei das Anpassen des objektklassenspezifischen Prüfplans in Abhängigkeit eines Unterschieds zwischen dem Messobjekt (24) und der Objektklasse und/oder einem Referenzobjekt (30) der Objektklasse durchgeführt wird.

6. Verfahren nach Anspruch 5,
**dadurch gekennzeichnet, dass** eine geometrische Transformation zwischen dem Messobjekt (24) oder Teil des Messobjekts (24) und einem Referenzobjekt (30), dem der objektklassenspezifische Prüfplan zugeordnet ist, bestimmt wird, wobei das Anpassen des objektklassenspezifischen Prüfplans in Abhängigkeit der Transformation durchgeführt wird.

7. Verfahren nach einem der vorangegangenen Ansprüche,
**dadurch gekennzeichnet, dass** der objektklassenspezifische Prüfplan in Abhängigkeit einer räumlichen Lage des Messobjekts angepasst wird.

8. Verfahren nach einem der vorangegangenen Ansprüche,
**dadurch gekennzeichnet, dass** aus dem resultierenden Prüfplan Messpunkte (32, 32`) bestimmt und für das Messobjekt (24) verifiziert werden, wobei der resultierenden Prüfplan verifiziert wird, wenn die Messpunkte (32, 32`) verifiziert wurden.

9. Verfahren nach den Ansprüchen 6 und 8,
**dadurch gekennzeichnet, dass** bei dem Verifizieren in Abhängigkeit der Transformation vorbestimmte Positionsinformationen von Messpunkten (32, 32`) genutzt werden.

10. Verfahren nach einem der vorangegangenen Ansprüche,
**dadurch gekennzeichnet, dass** in Abhängigkeit einer Objektklasse Messinformationen zum Vermessen des Messobjekts (24) bestimmt werden.

11. Verfahren nach einem der vorangegangenen Ansprüche,
**dadurch gekennzeichnet, dass** das Verfahren als Simulation durchgeführt wird.

12. Programm, welches, wenn es auf oder durch einen Computer ausgeführt wird, den Computer veranlasst, einen, mehrere oder alle Schritte eines Verfahrens zur Erzeugung eines Prüfplans für die Prüfung eines Messobjekts (24) gemäß einem der Ansprüche 1 bis 11 durchzuführen.

13. Vorrichtung (20) zum Erzeugen eines resultierenden Prüfplans für die Prüfung eines Messobjekts (24),
wobei die Vorrichtung mindestens eine Auswerteeinrichtung (26) und mindestens eine Einrichtung (22) zum Vermessen des Messobjekts (24) umfasst,
wobei wenigstens ein Datensatz durch Vermessen des Messobjekts (24) erzeugbar ist, wobei datenbasiert das Messobjekt (24) oder ein Teil des Messobjekts (24) wenigstens einer Objektklasse zuordenbar ist, wobei als objektklassenspezifischer Prüfplan ein der Objektklasse zugeordneter Prüfplan bestimmbar ist,
wobei der resultierende Prüfplan in Abhängigkeit des objektklassenspezifischen Prüfplans bestimmbar ist,
**dadurch gekennzeichnet, dass**
eine vorbekannte Zuordnung zwischen datenbasiert bestimmbaren Objekteigenschaften und den Objektklassen und/oder eine vorbekannte Zuordnung zwischen Objektklassen und Prüfplänen in Abhängigkeit von Objekteigenschaften eines aktuell vermessenen Messobjekts (24) und/oder des dem Messobjekt (24) zugeordneten resultierenden Prüfplans angepasst wird.

14. Verfahren zum Prüfen eines Messobjekts,
wobei ein resultierender Prüfplan mit einem Verfahren gemäß einem der Ansprüche 1 bis 11 erzeugt wird und wobei das Messobjekt (24) gemäß dem Prüfplan geprüft wird.

15. Vorrichtung (11) zum Prüfen eines Messobjekts,
wobei ein resultierender Prüfplan mit einem Verfahren gemäß einem der Ansprüche 1 bis 11 erzeugbar ist, wobei die Vorrichtung (11) mindestens eine Steuereinrichtung (12) zum Durchführen des resultierenden Prüfplans umfasst und wobei das Messobjekt (24) gemäß dem resultierenden Prüfplan prüfbar ist.
